# EUROPEAN PATENT SPECIFICATION

(11) **EP 2 129 503 B1**
(45) Date of publication and mention of the grant of the patent: **19.12.2012**
(21) Application number: 07825996.7
(22) Date of filing: 07.08.2007
(51) Int. Cl.: B27N 1/02, B27N 3/22, B27N 3/08, C08G 18/08, C08L 97/02, D21J 1/00

(54) **AGGLOMERATION PROCESS OF WOOD FIBRES (FIBREBOARD) FOR THE PRODUCTION OF AGGLOMERATE SLABS OR PANELS**
AGGLOMERATIONSPROZESS FÜR HOLZFASERN (FASERPLATTE) FÜR DIE HERSTELLUNG VON AGGLOMERATPLATTEN ODER -TAFELN
PROCÉDÉ D'AGGLOMÉRATION DE FIBRES DE BOIS (PANNEAU DE FIBRES) POUR LA PRODUCTION DE PLAQUES OU DE PANNEAUX D'AGGLOMÉRÉ

(30) Priority: 27.03.2007 PT 10370207
(43) Date of publication of application: 09.12.2009
(73) Proprietor: Universidade de Trás-os-Montes e Alto Douro, 5000-911 Vila Real (PT)
(72) Inventor: ALMEIDA RIBEIRO CLARO, João Carlos, P-5000-027 Vila Real (PT); RAGAGELES VALENTE, António José, P-3860-254 Estarreja (PT); DA ROSA PIRES, Artur, P-3830-052 Ílhavo (PT)
(74) Representative: Ferreira, Maria Silvina
(86) International application number: PCT/IB2007/053124
(87) International publication number: WO 2008/117138

(56) References cited:
- EP-A- 1 736 491
- WO-A-00/24800
- US-A- 4 752 637

## Description

### Technical:field of the invention

This invention refers to an agglomeration process of wood fibres to obtain agglomerated fibreboard slabs of different densities such as medium density fibreboard (MDF) **and** high density fibreboard (HDF) which consists of an impregnation and/or pulverisation of fibres with a pre-polymer of hydroxyl terminated polybutadiene (HTPB), a di-isocyanate and possibly a catalyst, followed by a compression.

This process aims to produce wood fibreboard agglomerates with better physical and mechanical properties which result in a better quality product with various applications in the construction and furniture industries for instance.

### Summary of the invention

The process that is the subject of this invention consists of an impregnation of wood fibreboard with a pre-polymer of hydroxyl terminated polybutadiene (HTPB), a di-isocyanate and possibly a catalyst followed by a compression phase of the fibreboard at a temperature between 30 a 90°C for a period that may vary between 1 minute and 3 days in order to obtain the agglomerated boards. The agglomeration system used in the process is formaldehyde-free and therefore presents an alternative to the current formaldehyde-based agglomerates and also fulfils the most demanding environmental criteria.

This process aims to produce agglomerated slabs of wood fibreboard with better physical and mechanical properties resulting in a better quality product and therefore also enabling exemplary quality slabs to be obtained irrespective of the nature of the wood fibreboard wether it is hardwood or resin-based.

### Background to the invention

The reprocessing or recovery and optimisation of manufactured products is a constant challenge and a crucially important factor for the competitiveness and the very survival of companies. It is becoming more and more common for product reprocessing, recovery and optimisation to consider environmental concerns and industrial practices must have a minimum impact on the environment. The adoption of "environmentally-friendly" practices were initially imposed by legislation but companies themselves quickly realised that they also could also be a very important factor in productivity, the corporate image and in its relationships with its customers, regulators, supervisory authorities and society as a whole.

In this context this invention represents a technological platform of great importance for the fibreboard agglomerate industries, launching them into a strategic framework characterised by an increase in the productivity and the quality of the products and by a cleaner and more environmentally-friendly production thereby contributing to environmental sustainability. But in particular this invention enables the optimisation of already existing products and - in the case of wood fibreboard agglomerates - it can overcome difficulties associated with the nature of the raw material itself which at the moment affect the productivity and quality of the final product.

The agglomerates currently used by the wood agglomerates industry (particle agglomerates and fibreboard agglomerates) are melamine formaldehyde or urea formaldehyde-based products and are often generically described in the sector as "resins". As these agglomerates contain formaldehyde they are subject to European standards (EN 120, EN 312-1, EN 662-1) which aim to regulate and control the maximum concentration of formaldehyde.

Formaldehyde is an organic compound and is part of the aldehyde family and in a more generic mode is part of the volatile organic compound (VOC) family. Formaldehyde is one of the chemical compounds included on the list of the main "Internal Air Pollutants" and is directly related to the phenomenon known as "Sick Building Syndrome" which refers to the degradation of air quality inside residential dwellings. The main source of formaldehyde inside buildings is in wood agglomerates, used frequently as a construction material and for furniture.

According to a study currently underway in the EU, formaldehyde is one of the substances which could be considered as a prime substance in any definition of interior air quality with wood agglomerates being one of the sources indicated of this pollutant.

It also states that a company producing wood agglomerates must refer in its "Storage Conditions" for slabs or panels of particle agglomerations that "they must be stored in a dry and ventilated location."

These types of pollutants may cause serious public health problems and in particular due to risks that contribute to various illnesses such as allergies, respiratory difficulties, headaches, vertigo, nausea, irritations of the ears, skin and respiratory channels, loss of intellectual capacities and cancer - with children being the most susceptible to these effects.

Another problem that is closely linked to the production processes is the fact that the agglomerating capacity of the current melamine-formaldehyde and urea-formaldehyde resins depend on the nature of the wood fibreboard. In fact current agglomerates manifest a significant reduction in their efficiency when the particles used originate from hardwoods (such as eucalyptus), in comparison with wood fibres from resinous trees (such as the pine tree.) This factor is very important both from a strategic and sector sustainability viewpoint, given the increased proliferation of the eucalyptus and its lower commercial value in relation to the pine tree.

Document US4803112 describes the use of a formulation comprised of hydroxyl terminated polybutadiene (HTPB), asphalt, a plasticizer and compounds with one or several isocyanate groups. This type of formulation differs from the disclosure in this invention to the extent that despite using some similar reagents or reagents from the same family to those proposed in this invention, it refers to a formulation designed to obtain an elastic polymer (elastomer) which acts as an impact-cushioner, for example between the fibreboard panels slabs for the production of pavements and not as an agglomerate for the production of fibreboard panels themselves. The use, amongst other reagents, of hydroxyl terminated polybutadiene (HTPB) and isocyanates or polyisocyanates in an elastomer formulation is one of the best known applications for these reagents, such as its usage in the production of adhesives and membranes as indicated in the following document.

Document WO 00/24800 discloses an agglomeration process for wood fibreboard using a formaldehyde based resin as binder and isocyanate as crosslinker. However, the present invention used a hydroxyl terminated polybutadiene as a binder.

Document US5872203 describes, amongst many other reagents, the possibility of using hydroxyl terminated polybutadiene (HTPB) and di-isocyanates for producing an adhesive for a polymeric material for insulation or for waterproofing roofs and ceilings which differs from the disclosure in this invention to the extent that despite referring to compounds that are identical to those described in this invention, it presents a formulation for obtaining a solid adhesive polyurethane to be used as a glue, for use on material surfaces used in roofs.

Document US6451384B1 describes, amongst many other reagents, the possibility of using hydroxyl terminated polybutadiene (HTPB) to produce a thermal adhesion liquid for the treatment/finish of fibreboard panel surfaces. This differs from the disclosure in this invention to the extent that despite using some reagents which are identical or from the same family as those proposed in this invention and which are used for fibreboard panels, it refers to a formulation to obtain a liquid for use on surfaces to increase (reinforcement or temper) resistance of the fibreboard panel surfaces. Moreover document US6451384B1 describes the composition of a liquid temper product for the treatment/finish of fibreboard panel surfaces and not an agglomerate for the production of a fibreboard panel itself.

Document US4752637 describes a ligand for the production of panels made of cellulosic or lignocelulosic materials namely fibreboard panels consisting of poly-isocyanates and polyols. This ligand differs from the disclosure of this invention to the extent that it does not use as its base agglomerating system a pre-polymer of hydroxyl terminated polybutadiene (HTPB).

### General Description of the Invention

This invention refers to an agglomeration process of wood fibres (fibreboard) to produce agglomerate slabs of wood fibreboard in different densities such as medium density fibreboard (MDF) slabs and high density fibreboard (HDF) slabs.

The agglomeration process uses a polymer obtained from the chemical reaction of a pre-polymer of hydroxyl terminated polybutadiene also referred to as HTPB with a di-isocyanate, such as toluene di-isocyanate(TDI), isofuran di-isocyanate (IPDI) and methylene diphenyl di-isocyanate (MDI). The reaction between those two reagents creates a final solid polymer with a large fibre agglomeration capacity. A catalyst can be used in this reaction, such as dibutylbis[(1-oxododecyl)oxy]/stannate or, more generically, (DBTDL-dibutyltin dilaurate), in order to increase the polymerisation speed.

The pre-polymer of hydroxyl terminated polybutadiene (HTPB) was selected because of its ability to distribute itself over an extensive surface area enabling its pulverisation and/or formation of aerosol thereby creating a saturated atmosphere in this pre-polymer. In fact the impregnation of wood fibres with the agglomerate is a fundamental phase in the production process of fibreboard agglomerated panels, due to the fact that the set of fibres represent a vast surface area to agglomerate and to the fact that fibres have a tendency to easily form small entanglements or "balls" which threaten the efficient impregnation of all the fibres. In fact mixing processes in any horizontal or vertical industrial mixers using shovels, screws or shanks have been shown to be inefficient either due to the great difficulty in operating the mixers due to the formation of entanglements and balls of fibres inside the mixer or due to the (resulting) very heterogeneous distribution of the agglomerate in the fibres.

Through the use of these mixing processes and after the compression and polymerisation, fibre agglomerates with blemishes may be created, resulting in an inefficient mixing of the agglomerations in the fibres without any mechanical resistance or without any uniform properties in the panel, and presenting zones which have been well agglomerated and non-agglomerated zones. Therefore this invention suggests an alternative process to the mixing process which consists of an impregnation of the fibres in order to obtain a homogeneous distribution of the agglomerate as described below.

After a successfully completed phase of fibre impregnation with the pre-polymer it is then necessary to trigger a chemical reaction of polymerisation which enables the binding of the various pre-polymer chains in order to obtain a final solid polymer which will foster the efficient agglomeration of the fibres.

Di-isocyanates were selected for this phase because, in addition to bringing about the intended chemical reaction, their different chemical structure enables different reaction speeds and final polymers with different characteristics to be obtained.
In addition to fostering the chemical binding of the various chains of hydroxyl terminated polybutadiene, the di-isocyanates enable links to be established between the chains of the final polymer (inter-chain links or crosslinks), creating a reticular structure which bestows a huge mechanical resistance and some flexibility to the final polymer. Because of this fact di-isocyanates are often referred to as "reticulants" or "reticulant agents". Depending on the type of di-isocyanate used different speeds of polymerisation are obtained.

However, the speed of this reaction can also be altered by the use of catalysts. This factor is very important from an industrial point of view because here the use of di-isocyanates is more viable and can lead to faster polymerisation speeds whilst using catalysts at the same time.

In the case of catalysed reactions the polymerisation period is often less than the time required for an efficient impregnation of the reagents in the fibres so that in the formulations of agglomerates that include catalysts, the impregnation of the fibres must be carried out in separate phases.

In this context a two-track or two-channel impregnation process is proposed in which the fibres are impregnated separately, in each of the tracks, with a fraction of the agglomerate. Therefore no flow of fibres is impregnated with the complete composition of the agglomerating system.

After this segregated impregnation process the fibres are channelled towards a single track where a homogenous distribution of the fibres from the two impregnation tracks is carried out for example in an air vortex.

Following this phase the fibres are immediately channelled to the compression system where there is the first efficient contact of all the reagents in the agglomerating system, with a rapid polymerisation reaction having been unleashed.

This polymerisation process is carried out at a higher temperature than the ambient temperature in order to obtain a faster and more efficient reaction.

The process consists of an impregnation and/or pulverisation of fibres with the pre-polymer of hydroxyl terminated polybutadiene, a di-isocyanate and (possibly) a catalyst followed by a phase where the fibres are compressed at a temperature between 30 - 90°C, for a period that can vary from between 1 minute to 3 days (depending on the type of di-isocyanate, the temperature selected and the use or not of a catalyst) to obtain the agglomeration slabs.

The agglomeration process of this invention is intended to be an alternative to the current agglomerates used in the wood fibreboard sub-sector enabling the production of agglomerates with properties that comply with the standards established for the product, irrespective of the nature of the fibres (fibre from hardwoods or resinous trees) and formaldehyde-free.

The resulting product from the agglomeration process of wood fibres, the subject of this invention, can therefore be obtained in the following ways:
● In a continuous production line in an integrated system of impregnation and/or pulverisation of the agglomerate, compression and cutting with temperature control;
● In a discontinuous production line which includes the impregnation and pulverisation phases and compression with temperature control;
● In a discontinuous production line in an individual system of impregnation, mould filling, mould compression, greenhouse placement and mould removal.

### Detailed description of the invention:

### 1. Preparation of the fractions of HTPB, the catalyst and the di-isocyanate

a) Preparation of a fraction for pulverisation composed of HTPB and the catalyst (such as DBTDL) with a concentration :in relation to the former between 0 and 1600 ppm.
b)Preparation of a fraction for pulverisation composed of HTPB and a di-isocyanate so that the mass percentage of hydroxyl terminated polybutadiene lies between .60 to 90% (m/m) and of di-isocyanate lies between 10 to 40% (m/m) .

### 2. Impregnation of the fibres

The wood fibres are impregnated, through pulverisation or by passing through an aerosol, with hydroxyl terminated polybutadiene (HTPB) and a di-isocyanate with a mass percentage of hydroxyl terminated polybutadiene in the aerosol between 60 to 90% (m/m) and a mass percentage of di-isocyanate between 10 to 40% (m/m).

To create this result the fibres are transported, in two separate tracks, along tubing to create forced air flow, thereby displacing it along two tubes thrust forward by the air movement.
In a designated section of the tube in the first track, the fibres are impregnated either through vaporisation or passing through an aerosol with hydroxyl terminated polybutadiene (HTPB) or they can also be impregnated with a mixture of hydroxyl terminated polybutadiene (HTPB) and a catalyst.
In a designated section of the other tube, the tube of the second track, the fibres are impregnated with hydroxyl terminated polybutadiene (HTPB) and a di-isocyanate.

Each of these flows in the two tubes, already with the impregnated fibres is then channelled to a joint tube creating thereby a single fibre flow..
The impregnation of the fibres in each of the two tracks, is carried out in such a way that in the single flow a proportion of hydroxyl terminated polybutadiene (HTPB), a di-isocyanate and a catalyst with a mass percentage of hydroxyl terminated polybutadiene (HTPB) between 60 to 90% (m/m) 10 to 40% (m/m) of di-isocyanate and up to 0 (zero) to 1600 ppm of catalyst is obtained.
a) impregnation of a flow of fibres in a 1^{st} track for pulverisation or for passing through an aerosol, with the fraction 1a);
b) impregnation of a flow of fibres in a 2^{nd} track for pulverisation or through passing through an aerosol with the fraction 2a).

### 3. Joining of the flows

The joining of the flow of fibres coming from the two impregnation tracks is undertaken in order to create a more or less homogenous distribution of the fibres of the two tubes into a single flow. For an equal and efficient distribution of the fibres of the two impregnation tracks in the single tube, it may be necessary to use the air vortex and/or air whirlwind processes thereby increasing the homogenisation of two fibre flows into a single flow.

### 4. Compression of the impregnated fibres

The single flow referred to in the previous point is deposited in order to form a layer what is known as a "mattress" which enables the compression of the impregnated fibres as follows:

### 4.1. In a continuous system

In a continuous production line, the fibres are then deposited on a conveyor belt forming what is called a "mattress" in the sector and compressed under movement at a temperature between 30°C and 90°C for the time required for the polymerisation and for a solid slab of fibre agglomerate to be obtained and this normally takes between 3 and 20 minutes.

### 4.2. In a discontinuous system

In a discontinuous production system, the fibres are deposited in a fixed compression press, which as a rule consists of various tray-type landing-areas which enable the compression of various slabs at the same time and the "mattress" is compressed at a temperature between 30°C and 90°C for the time required for the polymerisation and for a solid slab of fibre agglomerate to be obtained and this normally takes between 3 and 20 minutes.

### 4.3. Compression in a mould

Alternatively the fibres are deposited and compressed into a mould. The mould is placed in a greenhouse for the time required for the polymerisation, generally for between 5 and 30 minutes at a temperature varying between 40°C and 90°C, and then it is removed from the mould to obtain a solid slab of particle agglomerate.

### Example 1:

The fibres are impregnated through pulverisation or through passing through an aerosol, with hydroxyl terminated poly butadiene (HTPB), and a di-isocyanate with a concentration of these reagents in the aerosol of 85% (m/m) and 15% (m/m) respectively, and they are then channelled to a fixed compression press where they are placed until a fibre deposit ("mattress") is formed of a mass and volume appropriate for the agglomerate panel of fibreboard to be produced (such as MDF and HDF) and are compressed at 60°C for 2.5 hours.

The final product is a solid panel of fibreboard agglomerate with a density between 500 to 1200 kg/m³, an internal resistance between 0.78 and 1,3 N/mm and a swelling percentage at 24 hours between 2.5 and 4%.

### Example 2:

The fibres are impregnated through pulverisation or through passing though an aerosol, with 85% (m/m) hydroxyl terminated poly butadiene (HTPB), 500 ppm of a catalyst and 15% (m/m) of a di-isocyanate and they are then channelled to a fixed compression press where they are placed until a fibre deposit ("mattress") is formed of a mass and volume appropriate for the agglomerate panel of fibreboard to be produced (such as MDF and HDF) and are compressed in a mould for 15 minutes at 70°C.

The final product is a solid panel of fibreboard agglomerate with a density between 500 to 1200 kg/m³, an internal resistance between 0.78 and 1,3 N/mm and a swelling percentage at 24 hours between 2.5 and 4%.

## Claims

1. Agglomeration process of wood fibreboard for the production of slabs or panels of agglomerate **comprising**
· a procedure of wood fibre impregnation, by means of pulverisation or passing aerosol, with hydroxyl terminated polybutadiene (HTPB) and a di-isocyanate by means of transporting the fibres in two separate tracks
· being the hydroxyl terminated polybutadiene supplied via one of the tracks and the di-isocyanate through the other track,
· subsequently combining the two flows of impregnated fibres into a single flow containing:
i. hydroxyl terminated polybutadiene (HTPB) with a mass percentage between 60 to 90% (m/m) and
ii. di-isocyanate with a mass percentage between 10 to 40% (m/m).

2. Process, according to the preceding claim, **comprising** a procedure of wood fibre impregnation, through pulverisation or passing aerosol, which can be carried out by using tubing of forced air, thereby displacing the fibres along two tubes impelled by air movement.

3. Process, according to the preceding claims, **comprising** a procedure of wood fibre impregnation, through pulverisation or passing aerosol, with hydroxyl terminated polybutadiene (HTPB), a di-isocyanate and a reaction catalyst by means of transporting of the fibres in two separate tracks, being hydroxyl terminated polybutadiene and the catalyst supplied by one of the tracks and the di-isocyanate by the other, subsequently combining the two flows of impregnated fibres into a single flow which contains:
· hydroxyl terminated polybutadiene with a mass percentage between 60 to 90% (m/m),
· di-isocyanate with a mass percentage between 10 to 40% (m/m) and
· catalyst in a concentration up to 0 (zero) to 1600 ppm.

4. Process according to the preceding claims, **wherein** the pressing of the impregnated fibres is carried out in a continuous, discontinuous or in a mould system after the impregnation phase.

5. Process according to the preceding claim, **characterised in that,** in the continuous pressing system, the fibres are deposited on a conveyor belt and pressed under movement at a temperature between 30°C and 90°C for a period of time between 3 to 30 minutes.

6. Process according to claim 4 **characterised in that,** in the discontinuous pressing system, the fibres are deposited in a fixed press and are pressed at a temperature between 30°C and 90°C for a period between 3 to 30 minutes.

7. A process according to claim 4 **characterised in that,** in the mould pressing system, the mould is placed in a greenhouse for a period of time between 5 to 120 minutes and at a temperature that varies between 40 and 90°C being then removed from the mould.

8. Use of a wood fibreboard agglomeration process, according to the preceding claims, **characterised in that** it is designed for the slab and/or panel production of wood fibreboard agglomerates.

9. Use of a wood fibreboard agglomeration process, according to claim 8, **characterised in that** it is designed for the slab and/or panel production of wood fibreboard agglomerates of different densities.

## Patentansprüche

1. Agglomeration von ein Holzfasersplattenaggregat für Herstellung von beschichten Holzplatten oder -paneelen umfassend
. ein Verfharen für die Imprägnierung von Holzfasern mit einnen Zerstäubung oder Durchgang durch ein Aerosol mit Hydroxyl-terminiertes Polybutadien (HTPB) und ein Diisocyanat, mit Förderung des Fasers über zwei unterschiedliche Bhanen
. Hydroxyl-terminiertes Polybutadien ist uber eine der beide Bhanen geliefert und diisocyanat ist durch der ander Bhan geliefert,
. nachträglich, Kombination der beide Flüsse von tränken Fasern in einen einzeln Flusse enthaltend:
i Hydroxyl-terminiertes Polybutadien (HTPB) mit ein Massporzent zwischen 60 und 90% (m/m) und
ii Diisocyanat mit ein Massporzent zwischen 10 und 40% (m/m) .

2. Verfharen nach vorhergehend Anspruch, umfassend ein Imprägnierung Vorgang von Holzfasern durch Aerosols Zerstäubung oder Durchgang dass mit Verwendung von rohrgeleitet Drucklüft gemacht werden kann, und also die Fasern entlang zwei Tuben infolge des Luftkraftimpulses bewegen machen.

3. Verfahren nach vohergehende Ansprüche, umfassend ein Imprägnierung Vorgang von Holzfasern durch Aerosols Zerstäubung oder Durchgang mit Hydroxyl-terminertes Polybutadien (HTPB), ein Diisocyanat und ein Reaktions Katalysator enthaltend, mit die Förderung des Faserns durch Vermittlung von zwei Bhanen, mit das Versorgung von Hydroxyl-terminertes Polybutadien und Katalysator durch eines des Bahns und dem Diisocyanat durch die ander gemacht, und beide Fluxes von Imprägnierten Fasern werden nachträglich kombiniert in ein einzige Flux dass enthalts:
. Hydroxyl-trminierte Polybutadien mit ein Massporzent zwischen 60 und 90% (m/m),
. Diisocyanat mit ein Massporzent zwischen 10 und 40% (m/m) und
. Katakysator mit eine Konzentration von 0 (Null) zu 1600 P.P.M.

4. Verfharen nach vorgehenden Ansprüche, **dadurch gekennzeichnet, dass** die Druckung über dem tränken Fasern ist in ein continuerlich, nicht continuerlich oder ab-druck System nach der Imprägnations Phase gemacht.

5. Verfharen nach vorgehend Anspruch, dadurch gekennzeichenet, dass die Fasern über ein bewegend Förderband hinterlegt und gedruckt sind, unter eine Temperatur zwischen 30°C und 90°C entlang ein Zeit Period zwischen 3 und 30 Minuten.

6. Verfharen nach Anspruch 4, **dadurch gekennzeichnet, dass** in das nicht continuerlich Druckung System die Fasern sind hinterlegt in eine fixiert Presse und are gedruckt unter ein Temperatur zwischen 30°C und 90°C entlang ein Zeit Period zwischen 3 und 30 Minuten.

7. Verfharen nach Anspruch 4, **dadurch gekennzeichnet, dass** in das Ab-druck System die Formen ist in eine Gewäschshaus gesetzt entlang ein Zeit Period zwischen 5 und 120 Minuten und unter eine veränderlich Temperatur zwischen 40 und 90°C und ist dann von die Formen entfernt.

8. Verwendung von ein Holzfasersplatten Agglomeration Verfharen nach Vorgehende Ansprüche, **dadurch gekennzeichnet, dass** es für die Produktion von Holzfasersplattenagreggat enthaltend Platten und/oder Paneelen gezielt ist.

9. Verwendung von ein Holzfasersplatten Agglomeration Verfharen, nach Anspruch 8, **dadurch gekennzeichnet, dass** es für die Produktion von Platten und/oder Paneelen von Holzfasersplattenaggregat mit unterschiedlische Dichte gezielt ist.

## Revendications

1. Procédé d'agglomération de planches en fibre de bois pour la production de dalles ou panneaux d'agglomérat, que comprend
· un procès d'imprégnation des fibres de bois par intermédiaire de pulvérisation ou passage de aérosol, avec du polybutadiène hidroxytéléchélique (HTPB) et un diisocyanate, par l'intermédiaire du transit des fibres sur deux pistes séparées
. étant le polybutadiène hidroxytéléchélique fournit via une des pistes et le diisocyanate par l'autre piste,
. tout en combinant subséquemment les deux fluxes the fibres imprégnées dans un flux unique contenant:
i. polybutadiène hidroxytéléchélique (HTPB) avec un pourcentage de masse compris entre 60 et 90% (m/m) et
ii. diisocyanate avec un pourcentage de masse compris entre 10 et 40% (m/m).

2. Procédé selon la revendication précédente, lequel comprend un procès d'imprégnation de fibres de bois par l'intermédiaire de pulvérisation ou passage d'aérosol, lequel peut être exécuté avec l'utilisation de tubages d'air forcé, déplaçant ainsi les fibres au long des deux tubes, propulsées par le mouvement de l'air.

3. Procédé selon les revendications précédentes, lequel comprend un procès d'imprégnation par l'intermédiaire de pulvérisation ou passage d'aérosol avec du polybutadiène hidroxytéléchélique (HTPB), d'un diisocyanate et d'un catalyseur de réaction, a travers du transport des fibres sur deux pistes séparées, le polybutadiène hidroxytéléchélique et le catalyseur étant fournis par une des pistes et le diisocyanate par l'autre, et avec combinaison subséquent des deux fluxes de fibres imprégnées dans un seul flux, lequel contient :
. du polybutadiène hidroxytéléchélique, avec un pourcentage de masse compris entre 60 et 90% (m/m)
. du diisocyanate, avec un pourcentage de masse compris entre 10 et 40% (m/m) et
. du catalyseur à une concentration de environ 0 (zéro) jusqu'à 1600 ppm.

4. Procédé selon les revendications précédentes, dans lequel le passage des fibres imprégnées est exécuté après la phase d'imprégnation dans un système continuel, intermittent ou de moules.

5. Procédé selon les revendications précédentes, caractérisé parce que, dans le système de pression continue, les fibres sont déposées sur une courroie transporteuse et comprimées en mouvement à une température entre 30°C et 90°C pendant une période de temps de entre 3 et 30 minutes.

6. Procédé selon la revendication 4, caractérisé parce que, dans le système de pression discontinue, les fibres sont déposées dans une presse fixe et sont comprimées à une température de entre 30°C et 90°C pendant une période de temps de entre 3 et 30 minutes.

7. Procédé selon la revendication 4, caractérisé parce que, dans le système de compression en moule, la moule est mise dans une serre pendant une période de temps de entre 5 et 120 minutes et à une température qui varie entre 40 et 90°C, après quoi les fibres sont alors retirées de la moule.

8. Utilisation d'un procédé d'agglomération de planches de fibres de bois selon les revendications précédentes, caractérisé pour être désigné pour la production de dalles et/ou panneaux d'agglomérés de planches en fibres de bois.

9. Utilisation d'un procédé d'agglomération de planches de fibres de bois selon la revendication 8, caractérisé pour être désigné pour la production de dalles et/ou panneaux d'agglomérés de planches de fibres de bois de différentes densités.
